# EUROPÄISCHE PATENTANMELDUNG

(11) **EP 0 756 980 A1**
(43) Veröffentlichungstag der Anmeldung: **05.02.1997**
(21) Anmeldenummer: 96112101.9
(22) Anmeldetag: 26.07.1996
(51) Int. Cl.: B61D 1/00, B61D 1/06, B61D 3/10, B61D 17/04, B61C 5/00, B61F 3/12

(54) **Doppelstöckiger Eisenbahnwagen**

(30) Priorität: 02.08.1995 DE 29512446 U
(71) Anmelder: Schilling, Gerhard, 52066 Aachen (DE)
(72) Erfinder: Schilling, Gerhard, 52066 Aachen (DE)

(57) **Zusammenfassung**

Doppelstockwagen entsprechend dem Stand der Technik sind im Bereich der Fahrwerke nur einstöckig, um den erforderlichen Einbauraum freizuhalten. Ein hoher Doppelstockanteil am Fahrzeug läßt sich nur durch einen großen Längsabstand zwischen den Fahrwerken erreichen.
Aufgabe der Erfindung ist es, darüberhinaus ein günstiges Eigengewicht sowie eine große Breite des Fahrzeugs zu ermöglichen.
Dies wird durch die Verwendung von Niederflurfahrwerken (41) realisiert, welche es gestatten, sowohl den Fußboden des unteren Stockwerks (11) wie den des oberen (12) in Längsrichtung fortzuführen. Die Anordnung der Niederflurfahrwerke (41) in kurzem Längsabstand ermöglicht eine leichtere Wagenkastenstruktur. Der die Wagenbreite einschränkende Überhang im Gleisbogen wird verringert.
Nach dieser Erfindung können insbesondere Gelenkwagen bzw. Gelenk-Triebwagen vorteilhaft gebaut werden.

## Beschreibung

Die Erfindung betrifft Doppelstock-Eisenbahnwagen welche als einteilige oder als Gelenkfahrzeuge zum Transport von Personen oder Waren eingesetzt werden. Die Doppelstockwagen fahren entweder lokomotivbespannt oder werden wahlweise mit Diesel- oder elektrischem Antrieb ausgerüstet.

Doppelstöckige Reisezugwagen zum Beispiel bieten ein günstiges Verhältnis der Sitzplatzkapazität zur Fahrzeuglänge und werden deshalb vor allem dann eingesetzt, wenn Bahnhofs- und Gleisanlagen eine begrenzte Zugänge vorschreiben.

Stand der Technik sind Doppelstockwagen, welche über ihren Fahrwerken, aufgrund deren Bauhöhe, nur einstöckig ausgeführt sind.
Für eine große Transportkapazität wird ein großer Doppelstockanteil an der Gesamtlänge des Fahrzeug angestrebt. Daher werden die Fahrwerke in großem Längsabstand angeordnet.

Daraus sowie der hohen Zuladung des Doppelstockwagens resultiert eine große Biegebelastung des Wagenkastens und erfordert eine stark dimensionierte Struktur. Bisherige Doppelstockkonstruktionen haben daher ein ungünstiges Verhältnis der Sitzplatzzahl zum Fahrzeugleergewicht.

Bei Fahrt durch Gleisbögen verursachen die langen Fahrwerkabstände einen großen seitlichen Überhang gegenüber der Gleismittelachse, weshalb der Wagenkasten in geringerer Breite ausgeführt sein muß als bei Wagen mit kürzeren Fahrwerksabständen.
Insbesondere im oberen Stockwerk müssen daher beengte Platzverhältisse hingenommen werden, da die maßgebenden Fahrzeugumgrenzungsprofile der Eisenbahnen eine starke seitliche Verjüngung im oberen Bereich vorschreiben. Ziel der Erfindung ist die Aufhebung dieser Nachteile der bekannten Doppelstockwagen.

Der Doppelstockwagen soll ein geringes Eigengewicht und eine möglichst große Wagenkastenbreite haben.
Ferner soll die Konstruktion anpassungsfähig hinsichtlich des verlangten Transportvolumens und der Fahrzeuglänge sein.
Schließlich soll es möglich sein, den Doppelstockwagen als Triebwagen zu bauen.

Der Erfindung gemäß wird zur Lösung dieser Aufgabe der Doppelstockwagen mit Niederflurfahrwerken ausgerüstet.

Niederflurfahrwerke sind vor allem bei Straßenbahnwagen bekannt geworden.
Dies sind erstens Drehgestelle, welche Radsätze mit kleinen Raddurchmessern besitzen, so daß über den Radsatzwellen ein tiefliegender Fußboden angeordnet werden kann.

Die andere Bauart von Niederflurfahrwerken verwendet Losräder ohne Radsatzwelle. Der Fußboden wird zwischen den Radscheiben angeordnet und seine Höhe ist unabhängig vom Raddurchmesser.
Losradfahrwerke besitzen ein anderes und zum Teil auch ungünstigeres Laufverhalten als konventionelle Drehgestelle.

Niederflurfahrwerke ermöglichen somit, den Fußboden des unteren Stockwerks über das Fahrwerk hinwegzuführen, ohne daß Stufen überwunden werden müssen. Lediglich die Räder und eventuelle andere Fahrwerksbauteile ragen beiderseits des Durchgangs über das Fußbodenniveau hinaus und werden von Podesten überdeckt.
Von diesen Podesten abgesehen nehmen Bauart und Anordnung der Fahrwerke keinen Einfluß auf die Gestaltung des Innenraums.

Weil auch der Doppelstockanteil am Gesamtfahrzeug nicht beeinflußt wird, können die Fahrwerke in geringem Längsabstand angeordnet werden.

Der geringe Fahrwerkabstand reduziert die anteilig pro Rad zu tragende Nutzlast. Das anteilige Fahrzeugeigengewicht wird sogar noch stärker reduziert, da sowohl geringere Last als auch kürzere Stützweite die Biegemomentenbelastung im Wagenkasten reduzieren und eine leichter dimensionierte Konstruktion erlauben.

Der verkürzte Fahrwerkabstand macht daher den kleinen Raddurchmesser erst möglich, ohne daß Rad- und Schienenverschleiß unzulässig ansteigen, denn die zulässigen Radlasten steigen mit dem Durchmesser an.

Niederflurfahrwerk und kurzer Fahrwerksabstand des Doppelstockwagens bedingen sich also gegenseitig.

In einer früheren Patentschrift ist vorgeschlagen worden, Doppelstockgelenkfahrzeuge mit radialgesteuerten Einzelradsatzfahrzeugen kleinen Raddurchmessers auszurüsten, wodurch eine niedrige Fußbodenhöhe ermöglicht wird [Schweizer Patent **Nr. 350679**, veröffentlicht am 31.01.1961]. Die Verwendung von Einzelradsätzen anstelle von Drehgestellen führt hier jedoch zu unzulässig hohen Radlasten. Außerdem verhält sich eine Zwangs-Radialsteuerung spurführungstechnisch schlechter als ein frei laufendes Drehgestell.
In [Europäische Patentanmeldung **Nr. 0642 964 A1**, veröffentlicht am 15.03.95] sind die Wagenglieder bzw. die Fahrwerksabstände so kurz ausgelegt, daß sich tragbare Radlasten ergeben. Es sind allerdings immer noch lauftechnisch problematische Einzelachsfahrwerke vorgesehen. Ferner werden in der Schrift große Raddurchmesser gefordert, so daß die verbleibende Durchgangshöhe über den Radsatzwellen zu gering ist, wenn die in Europa zulässigen Fahrzeughöhen zugrundegelegt werden. Im Unterstock muß beim Durchgang über das Fahrwerk eine Stufe überwunden werden.

Die angeführten Nachteile werden mit dieser Erfindung vermieden.

Der durchgehend stufenlos begehbare Fußboden steigert den Reisekomfort. Auch behinderte Fahrgäste In Rollstühlen werden nicht von Treppen aufgehalten, wenn sie sich längs des Zuges bewegen möchten. Es sind weniger Treppen als üblich erforderlich, da sie nur zum Wechsel des Stockwerks, nicht zum Durchgang in Längsrichtung frequentiert werden. Durch den geringeren Treppenanteil ergibt sich ein Gewinn an Nutzraum.
Ferner bietet der kurze Fahrwerkabstand den Vorteil, daß der seitliche Überhang im Gleisbogen reduziert ist und so eine größere Wagenkastenbreite gestattet, welche ebenfalls Platzangebot und Komfort steigert.

Teile des Niederflurfahrwerks ragen über das Fußbodenniveau hinaus und müssen mit Podesten überbaut werden. Diese Podeste können erhöhte Sitzgruppen tragen oder auch Schränke zur Aufnahme von Gepäck oder Geräten zum Beispiel der Lüftungs- bzw. Klimaanlage.
Es bietet sich aber auch an, die vorzusehenden Treppen jeweils über einem Fahrwerkspodest zu plazieren. Daraus resultiert, daß der Abstand der Treppen gleich dem der Fahrwerke ist. Im Interesse eines bequemen Fahrgastwechsels sollen Einstiegstüren jeweils nahe der Treppen angeordnet sein. Da Zwischenetagen, wie sie herkömmliche Doppelstockwagen aufweisen, nicht mehr vorhanden sind, werden die Einstiege im Unterstock angeordnet.

Zur Aufnahme der Biegemomente werden die Wagenkästen als 4-Gurt-Brückenträger gestaltet. Die beiden unteren Gurte werden von den seitlichen Langträgern gebildet. Als Obergurte fungieren die Seitenwandbereiche unterhalb der Dachschrägen.
Durch die ebene Gestaltung des Biegeträgers wird seitliches Ausknicken vermieden.
Je nach zugrundegelegtem Umgrenzungsprofil beträgt die wirksame Konstruktionshöhe des Biegeträgers dann ca. 3,0m, was herkömmlichen Einstockwagen entspricht.

Die Seitenwandbereiche zwischen Unter- und Obergurt können nach [Deutsches Gebrauchsmuster **G 93 06 853.0**, bekantgegeben in Patentblatt 19.08.93] als ebene Fachwerke gestaltet werden. Dessen senkrechten und schrägen Stäbe werden nur auf Zug oder Druck beansprucht und lassen sich so schlank ausführen, daß sie keine gravierende Sichtbehinderung hervorrufen, wo Fenster durchkreuzt werden.

Wo einzelne Wagen eine zu geringe Transportkapazität bieten, werden Gelenkfahrzeuge gewählt. Bei doppelstöckigen Gelenkwagen lassen sich Niederflurfahrwerke besonders vorteilhaft anwenden, da sie es ermöglichen, den Doppelstockbereich über die Gelenke hinweg zu führen.

Um die Konstruktion der Wagenkastengelenke und Übergänge zu vereinfachen, werden sie als sogenannte "schwebende Gelenke" gebaut:
Die Drehgestelle werden nicht mittig unter dem Gelenk angeordnet, sondern unter einen der beiden Wagenkästen versetzt. Infolgedessen können die zugkraftübertragende Gelenkkupplung füe die beiden Wagenkästen einerseits und hochbauende Bauteile des Drehgestells andererseits hintereinander angeordnet werden, woraus sich eine geringe Gesamtbauhöhe ergibt.
Ferner ist es durch die außermittige Fahrwerksanordnung auch beim Gelenkwagen möglich, die Treppe zum Oberdeck über einem Fahrwerkspodest zu plazieren.

Eine leichte und einfache Bauart für solche Wagenkastengelenke, welche sich ferner gut für Wagenkästen in der hier angewandten Fachwerkbauart eignet sowie nur geringen Platz im Durchgangsbereich beansprucht, ist in [Deutsches Gebrauchsmuster **G 93 06 853.0**, ebda.] beschrieben.
Das Gewicht des getragenen Wagenglieds wird von zwei Zugpendeln getragen, welche in Seitenwandebene angeordnet sind und Vertikalkräfte daher momentenfrei einleiten.
Durch gegensinnige Pendelbewegung wird das gegenseitige Ausknicken der Wagenkästen bei Bogenfahrt ermöglicht.

Zur Übertragung der horizontalen Kräfte dient eine Kupplungsdeichsel, welche unter dem unteren Fußboden angeordnet ebenfalls eine momentenfreie Krafteinleitung bewirkt.

Soll der Doppelstockwagen als Triebwagen ausgeführt werden, wird die Antriebsanlage über dem Enddrehgestell, die gesamte Fahrzeughöhe einnehmend, installiert.
Dies ergibt den geringsten Verlust an Nutzraumvolumen und der mittlere Wagenbereich kann durchgehend doppelstöckig ausgeführt werden. Durch den Einbau der schweren Antriebsaggregate über dem Fahrwerk ergibt sich auch die geringste Biegebelastung für den Wagenkasten.
Das Endfahrwerk braucht nicht niederflurig zu sein, kann also eine größere Last tragen als die Mittelfahrwerke. Damit können die Enddrehgestelle auch das benötigte Reibungsgewicht erhalten, wenn sie die Triebdrehgestelle sind.
Falls keine im Drehgestell montierten Fahrmotoren verwendet werden, lassen sich die Radsätze durch kurze, platzsparende Gelenkwellen antreiben.

Als Ausführungsbeispiel der Erfindung zeigen die Fig. 1 bis 5 einen dreiteiligen Doppelstock-Dieseltriebwagen für den Personenverkehr,
Fig. 1 eine Schnitt-Ansicht des Fahrzeugs von der Seite,
Fig. 2 den Grundriß des unteren Stockwerks,
Fig. 3 den Grundriß des oberen Stockwerks,
Fig. 4 einen Querschnitt durch den Fahrwerksbereich,
Fig. 5 Halbschnitte durch Einstieg und Sitzabteil,
Fig. 6 eine halbe Draufsicht auf das Niederflurdrehgestell,
Fig. 7 einen Längsschnitt durch das Drehgestell aus Fig. 6,
Fig. 8 eine Schnitt-Ansicht des Drehgestells aus Fig. 6,
Fig. 9 zwei Halbschnitte des Drehgestells aus Fig. 6 und 8, wobei folgende Bezugszeichen verwendet sind:

- 1: Endwagen
- 2: Zwischenwagen
- 3: Endwagen
- 11: Fußboden, Unterstock
- 12: Fußboden, Oberstock
- 13: Wagendach
- 21: Untergurt
- 22: Obergurt
- 23: Stab, schräg
- 24: Stab, senkrecht
- 25: Türsäule
- 31: Stirnfront, schwenkbar
- 32: Gummiwulst
- 35: Führerstand
- 36: Einstieg
- 37: Treppe
- 38: Podest
- 39: Geräteschrank
- 41: Fahrwerk, niederflurig
- 42: Fahrwerk, angetrieben
- 44: Zugpendel
- 45: Kupplungsdeichsel
- 46: Kugelgelenk
- 48: Faltenbalg
- 51: Dieselmotor
- 52: Getriebe
- 53: Gelenkwelle
- 54: Kühleranlage
- 61: Radsatz
- 62: Bremszange
- 63: Primärfeder
- 64: Sekundärfeder
- 65: Zug/Druckstange
- 66: Drehgestellrahmen

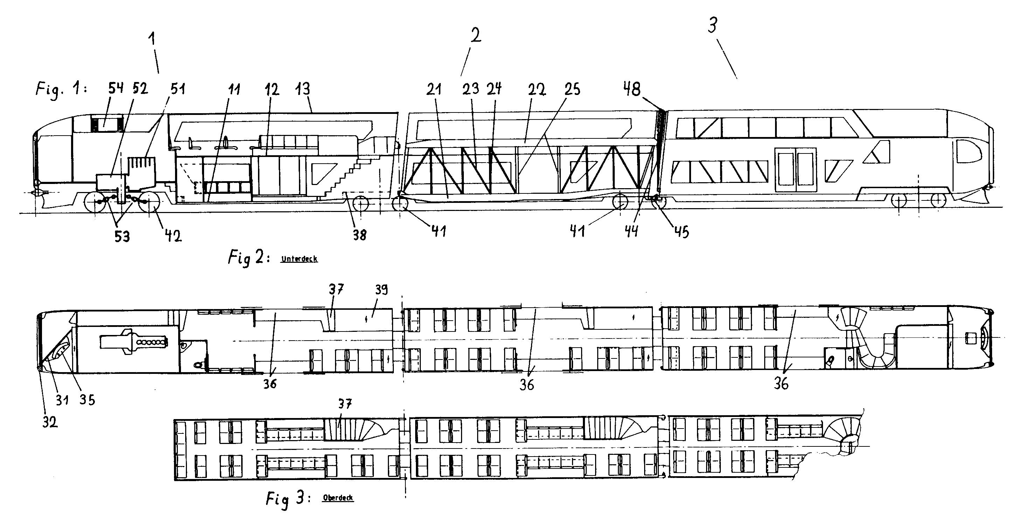

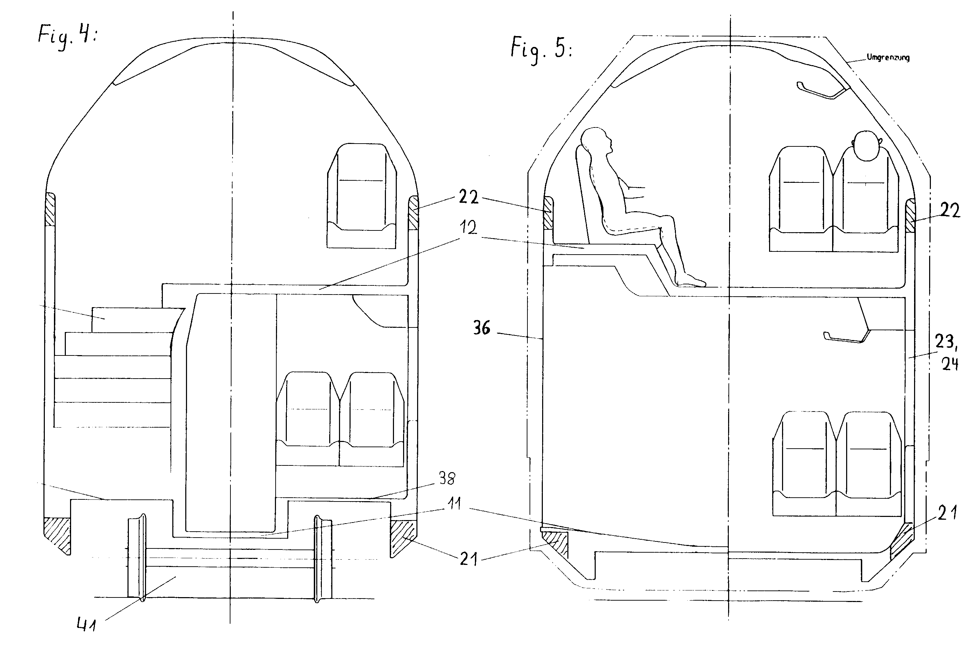

Der Triebwagen besteht aus 3 Wagengliedern (1, 2 und 3), welche je einen doppelstöckigen Fahrgastraum besitzen, und 4 Drehgestellfahrwerken.
Aus dem Gelenkabstand von ca. 12m ergibt sich ein sinnvolles Rastermaß für die Aufteilung der Fahrgasträume und die Türanordnung. Um einen schnellen und bequemen Fahrgastfluß zu ermöglichen, wird die Treppe zum Oberdeck in Türnähe, über einem Fahrwerkspodest, eingebaut.
Sie wird in den oberen Stufen gebogen geführt, damit genug Kopffreiheit unter der Seitenwand-Dachrundung bleibt (Fig.4).
In beiden Decks ist über die gesamte Zuglänge ein stufenloser Durchgang möglich. Treppen werden daher nur zur Verbindung der Decks, nicht zum Durchgang längs frequentiert, weshalb eine Treppe pro Wagenglied genügt.
Zu den im unteren Stockwerk angeordneten Einstiegen (36) ist der Fußboden (11) rampenförmig hochgezogen (Fig. 5), so daß bei den üblichen Bahnsteighöhen von 380 bis 760mm über Schienenoberkante bequem ein- und ausgestiegen werden kann.

Der Kopf des Endwagens (1) kann wahlweise als Führerstand oder als Übergang in einen angekuppelten zweiten Triebwagen genutzt werden.
Dazu besitzt der Kopf eine schwenkbarer Frontwand (31) inclusive Windschutzscheibe und Führerstand (35) sowie einen Gummiwulst (32) zur Abdichtung. Die Führerkabinen sind von den Fahrgasträumen über je einen Seitengang zugänglich. Die diagonal eingeschwenkten Frontwände (Fig. 2) verdecken alle Führerstandseinrichtungen, welche Fahrgästen nicht zugänglich sein sollen.
Diese Bauart entspricht dem dänischen Schnelltriebwagen IC 3 **[N. T. Nielsen, H. Fischer** " Der neue Triebzug **IC 3** der Dänischen Staatsbahn - Ein Konzept für die Zukunft" Eisenbahntechnische Rundschau 1-2/1990, Seite 63].

Ferner ist im Endwagen eine Antriebsanlage, bestehend aus Dieselmotor (51), Getriebe (52) und Gelenkwellen (53) installiert. Neben dem Maschinenraum befindet sich ein Durchgang vom Führerstand zum Fahrgastraum.

Um möglichst wenig Einbauraum zu benötigen, wird das Getriebe (52) mit seinem Abtrieb in Drehgestellmitte plaziert, so daß nur zwei kurze Gelenkwellen (53) zu den Radsatzgetrieben nötig werden. Diese Anordnung entspricht der bei der Diesellokomotive **V 200** der DB gewählten. Mit den heute zur Verfügung stehenden Gleichlaufgelenkwellen ist diese Bauart besonders vorteilhaft.
In einem komplett abnehmbaren Dachmittelstück, welches den Ausbau der Antriebskomponenten nach oben ermöglicht, wird die Kühleranlage (54) installiert.
Anstelle der skizzierten Antriebsanlage mit Dieselmotor und Getriebe kann im gleichen Maschinenraum auch eine elektrische Antriebsanlage installiert werden.

Der Mittelwagen (2) ist im Aufriß und ohne Inneneinrichtung gezeichnet, um seine Tragstruktur zu verdeutlichen (Fig. 1).
Untergurt (21), Obergurt (22) und die Stäbe (23, 24) bilden gemäß [Deutsches Gebrauchsmuster **G 93 06 853.0**, ebda.] ein statisch bestimmtes Fachwerk. Die Einstiegsöffnungen werden von seitlichen Türsäulen (25) umschlossen. Die Endwagen werden konstruktiv entsprechend gestaltet.
Alle Fahrzeugglieder werden weitgehend modular aufgebaut, das heißt im Fahrgastbereich bestehen Mittel- und Endglieder aus gleichen Bauteilen.

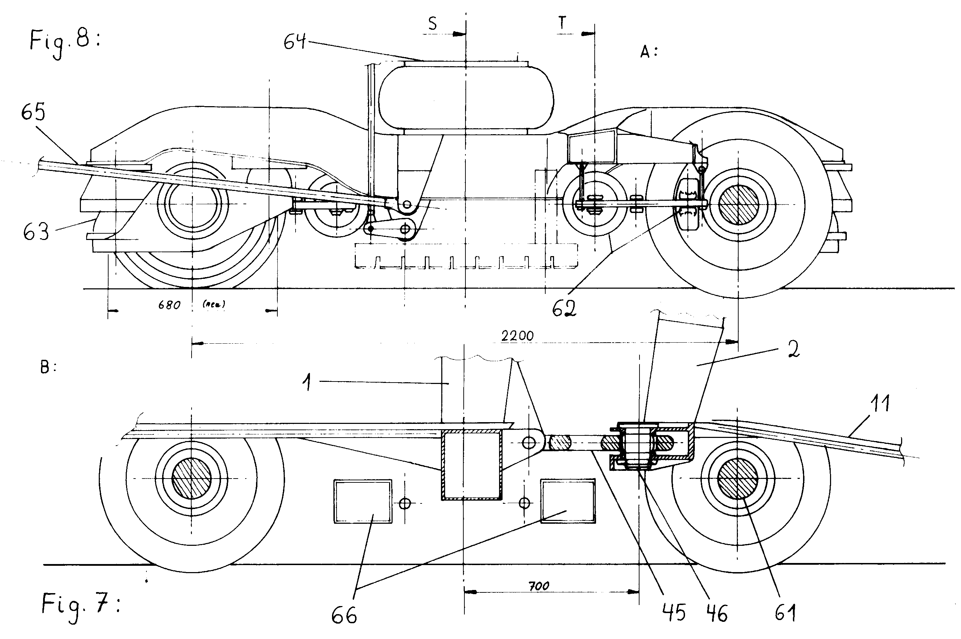

Die Gelenke bestehen gemäß [Gebrauchsmuster **G 93 06 853.0**, ebda.] aus je 2 seitlichen Zugpendeln (44) und einer zentralen Kupplungsdeichsel (45). Die Kupplungsdeichsel ist im jeweils links dargestellten Wagenkasten (Fig. 1 und 7) um die Querachse schwenkbar gelagert. Im jeweils rechten Wagenkasten ist sie in einem Kugelgelenk (46) gelagert, welches auch das Schwenken um die Hochachse ermöglicht. Die Hochachse definiert die Gelenkmitte.

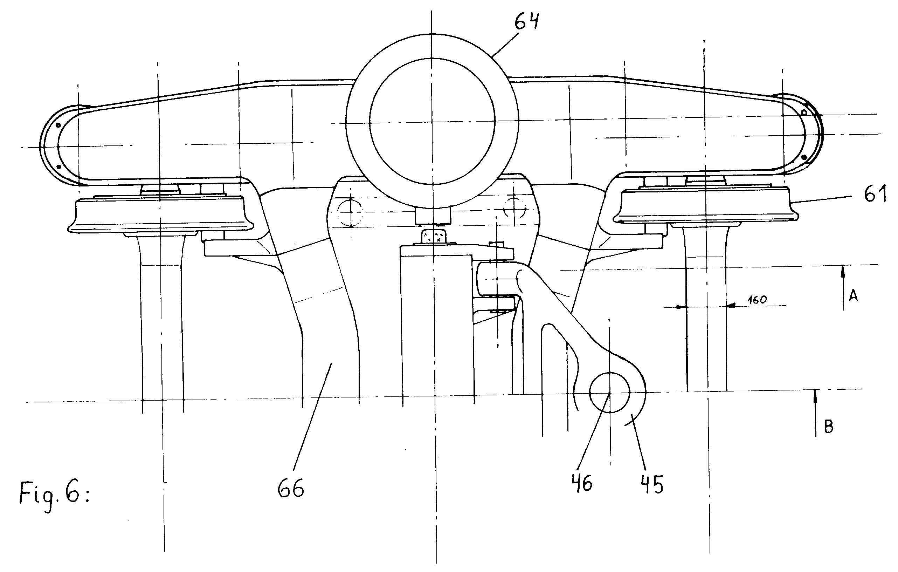

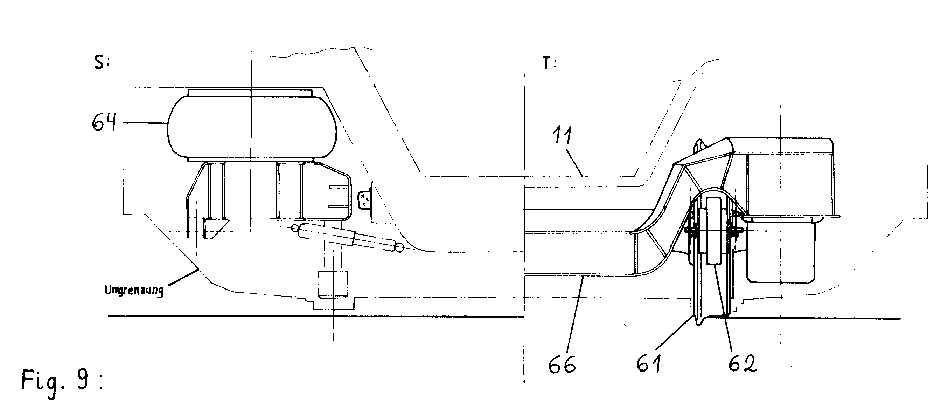

Die im Ausführungsbeispiel verwendeten Drehgestelle (41) weisen Konstruktionsmerkmale auf, welche eine niedrige Lage des Unterstock-Fußbodens (11) ermöglichen (Fig. 6 bis 9).
Sie besitzen Radsätze von kleinem Raddurchmesser (61) sowie nach unten gekröpfte Querträger des Drehgestellrahmens (66).
Jedes Rad trägt Radbremsscheiben, welche von pneumatisch betätigten Bremszangen (62) gebremst werden. Die Bremszangen liegen in Radebene und halten dadurch den mittleren Durchgang frei (Fig. 9).

Zur primären Abfederung zwischen Radsatz und Drehgestellrahmen werden im Beispiel Gummi-Rollfedern (63) verwandt, Luftfedern (64) dienen als Sekundärfedern zwischen Drehgestellrahmen und Wagenkasten. Zur Übertragung der Längskräfte werden zwei seitliche Zug/Druckstangen (65) eingesetzt (Fig. 8).

Das Drehgestell ist gegenüber der Gelenkmitte um 700mm versetzt angeordnet (Fig. 7). Die Kupplungsdeichsel (45) mit ihren Lagern in den Wagenkästen (1) und (2) kann dadurch niedrig plaziert werden.

Durch das Einfügen weiterer, gleicher, Mittelwagen (2) können unterschiedlich lange Triebwagen gebaut werden.

Im Endwagen (3) kann bei höherem Leistungsbedarf eine zweite Antriebsanlage installiert werden.

## Patentansprüche

1. Doppelstöckiger Eisenbahnwagen, als einteiliges Fahrzeug oder als Gelenkfahrzeug mit mehreren Wagengliedern ausgeführt, dadurch gekennzeichnet, daß mindestens ein Niederflurfahrwerk (41) vorhanden ist, über welchem ausreichend Bauhöhe verbleibt, um im unteren wie im oberen Stockwerk Durchgänge anzuordnen.

2. Doppelstöckiger Eisenbahnwagen nach Anspruch 1, dadurch gekennzeichnet, daß als Niederflurfahrwerk ein Drehgestell mit Radsätzen (61) kleinen Raddurchmessers verwendet wird, so daß der Fußboden (11) des unteren Stockwerks über den Radsatzwellen angeordnet wird.

3. Doppelstöckiger Eisenbahnwagen nach Anspruch 1, dadurch gekennzeichnet daß das Niederflurfahrwerk Losräder ohne Radsatzwellen besitzt, so daß der Fußboden des unteren Stockwerks zwischen den Radscheiben angeordnet wird.

4. Doppelstöckiger Eisenbahnwagen nach Anspruch 1 und 2 oder 3, dadurch gekennzeichnet, daß die Fahrwerke in kurzem Längsabstand angeordnet sind, so daß die resultierende Gewichtsbelastung pro Fahrwerk die unter Festigkeits- und Verschleißgesichtspunkten zulässige Gewichtsbelastung des verwendeten Niederflurfahrwerks einhält.

5. Doppelstöckiger Eisenbahnwagen nach Anspruch 1, dadurch gekennzeichnet, daß Bauteile der Niederflurfahrwerke (41), welche über die Fußbodenhöhe hinausragen, mit Podesten (38) überdeckt werden.

6. Doppelstöckiger Eisenbahnwagen nach Anspruch 1 und 5, dadurch gekennzeichnet, daß mindestens ein Fahrwerkspodest mit der Treppe (37) zum oberen Stockwerk und/oder Geräteschränken (39) überbaut ist.

7. Doppelstöckiger Eisenbahnwagen nach Anspruch 1 und 4, dadurch gekennzeichnet, daß die Seitenwände im Bereich zwischen Fußboden des unteren und Fenster des oberen Stockwerks als Biegeträger zur Aufnahme der Gewichtslasten des Wagenkastens gestaltet sind.

8. Doppelstöckiger Eisenbahnwagen nach Anspruch 1 und 4 und als Gelenkfahrzeug aus mindestens 2 Wagenkästen bestehend, dadurch gekennzeichnet, daß in beiden Stockwerken Übergänge durch das Wagenkastengelenk bestehen.

9. Doppelstöckiger Eisenbahnwagen nach Anspruch 1 und 8 dadurch gekennzeichnet, daß das Wagenkastengelenk von einem außermittig zur Gelenkachse angeordneten Niederflurfahrwerk (41) getragen wird.

10. Doppelstöckiger Eisenbahnwagen nach Anspruch 1 und 8, dadurch gekennzeichnet, daß die äußeren Enden der Endwagen Übergangseinrichtungen (31, 32) zu angekuppelten Eisenbahnfahrzeugen besitzen.

11. Doppelstöckiger Eisenbahnwagen nach Anspruch 1 und 8 in der Ausführung als Triebwagen, dadurch gekennzeichnet, daß Antriebs- und Hilfsmaschinen (51, 52, 54) in einem oder, in beiden Endwagen jeweils über dem Endfahrwerk (42) installiert sind.
